# FASCICULE DE BREVET EUROPEEN

(11) **EP 4 277 844 B1**
(45) Date de publication et mention de la délivrance du brevet: **26.02.2025**
(21) Numéro de dépôt: 22705854.2
(22) Date de dépôt: 17.01.2022
(51) Int. Cl.: B64C 11/38, F03D 7/02, F04D 29/36, B22F 5/00, F04D 29/32

(54) **SOUFFLANTE A CALAGE VARIABLE**
LÜFTER MIT VARIABLER NEIGUNG
VARIABLE PITCH FAN

(30) Priorité: 18.01.2021 FR 2100444
(43) Date de publication de la demande: 22.11.2023
(73) Titulaire: SAFRAN AIRCRAFT ENGINES, 75015 Paris (FR)
(72) Inventeur: LEVISSE, Paul Ghislain Albert, 77550 MOISSY CRAMAYEL (FR); BELMONTE, Olivier, 77550 MOISSY CRAMAYEL (FR)
(74) Mandataire: Casalonga
(86) Numéro de dépôt international: PCT/FR2022/050091
(87) Numéro de publication internationale: WO 2022/153018

(56) Documents cités:
- FR-A1- 3 036 141
- FR-A1- 3 046 407
- US-A- 3 873 236
- US-A1- 2018 334 915

## Description

### Domaine technique

La présente invention se rapporte au domaine général des turbomachines équipées d'une ou deux soufflante(s) carénée(s) ou non carénée(s), et plus particulièrement à la chambre de vérin permettant le réglage commandé du calage des pales de soufflante(s) de ces turbomachines.

La présente invention vise à constituer un dispositif de calage à vérin rapporté qui optimise l'intégration de la chambre de vérin.

### Techniques antérieures

On connaît des systèmes de calage qui permettent de réaliser un réglage de l'orientation des pales qui forment les hélices de turboréacteurs pour régler la poussée fournie selon l'environnement grâce à un dispositif à vérin.

La demande de brevet FR3046407, décrit un actionneur annulaire de système de calage dont le corps est constitué par le support palier, et sur lequel le fond de chambre est rapporté. L'étanchéité doit être assurée par plusieurs pièces rapportées (capot, crabots de fixation...). En cas de déformation du support palier, par exemple quand il est soumis à un fort balourd de la soufflante, le piston peut se coincer dans le corps de vérin.

Le brevet US4718823 décrit un dispositif à vérins ayant un corps de vérin avec un fond de chambre rapporté, le tout rapporté sur le support palier, ce qui multiplie les opérations de montage. De plus, ce document ne décrit pas le système d'alimentation de la chambre de vérin. La demande de brevet FR3036141A1 divulgue un arbre de commande radial pour dispositif de commande de l'orientation des pales de soufflante d'une turbomachine à soufflante non carénée, l'arbre comprenant une partie externe qui est destinée à être montée dans le dispositif de commande par l'extérieur de celui-ci et à être couplée à au moins une pale de soufflante pour le réglage de son orientation, et une partie interne, indépendante de la partie externe, qui est destinée à être montée par l'intérieur du dispositif de commande, à être reliée à un palier de transfert de mouvement pour faire pivoter l'arbre autour d'un axe radial, et à assurer une fermeture d'une enceinte huile dans laquelle est logé ledit palier, les parties externe et interne de l'arbre étant couplées l'une à l'autre.

### Exposé de l'invention

L'invention a pour but de pallier au moins certains des inconvénients précités et de proposer un système de dispositif à vérins ayant un corps de vérin rapporté, permettant un montage simple, qui assure de ne pas coincer le vérin dans sa chambre et qui permet une bonne étanchéité entre la chambre et le piston.

Au vu de ce qui précède, l'invention a pour objet un dispositif comme défini dans la revendication 1.

De préférence, le volume interne du corps de vérin est fermé en amont par une paroi munie d'une pluralité de trous traversés par les tiges de vérins.

Par exemple, le corps de vérin est solidarisé au carter annulaire formant support de palier par une bride circulaire entourant le corps de vérin.

Avantageusement, la bride circulaire est vissée sur le carter annulaire.

De préférence, le dispositif comporte des créneaux répartis sur le contour intérieur du fond de chambre.

Dans un mode de réalisation, le dispositif comporte un circuit d'huile annulaire centré sur l'axe longitudinal et entourant la pluralité de tiges de vérins et comportant un passage débouchant formant une entrée d'huile traversant le carter annulaire vers le corps de vérin.

Avantageusement, le circuit d'huile annulaire comporte une double circulation d'huile à travers deux canaux annulaires sensiblement concentriques.

Le dispositif peut comporter plusieurs corps de vérin dans chacun desquels est logé un piston, lesdits corps de vérin étant répartis régulièrement autour de l'axe longitudinal de la turbomachine et chaque piston étant lié par une extrémité d'une tige de vérin à un anneau de synchronisation.

Selon une forme de réalisation, l'invention se rapporte à un système de commande de l'orientation des pales de soufflante d'une turbomachine comportant au moins un ensemble de pales de soufflante à orientation réglable, ledit ensemble étant solidaire en rotation d'un anneau rotatif, les pales de soufflante étant couplées, pour le réglage de leur orientation, à un palier de transfert de mouvement destiné à faire pivoter des pivots des pales de soufflante autour de leur axe radial, ledit palier de transfert de mouvement comprenant une bague interne reliée à un dispositif tel que défini précédemment.

L'invention concerne également un procédé de montage du dispositif comprenant, à partir d'un arbre d'hélice préalablement monté sur un carter principal de la turbomachine par l'intermédiaire d'un palier à roulement, l'assemblage de chaque vérin formé des tiges de vérin et du piston monté sur le corps de vérin, ledit assemblage étant effectué en logeant chaque vérin un à un à l'intérieur du carter formant support de palier, et l'assemblage de cet ensemble sur le carter principal de la turbomachine et l'arbre d'hélice.

### Brève description des dessins

L'invention sera mieux comprise à l'étude détaillée de quelques modes de réalisation pris à titre d'exemples non limitatifs et illustrés par les dessins annexés, sur lesquels :
[Fig 1] est une vue en coupe dans son environnement d'un dispositif à vérin fixe selon l'invention.
[Fig 2] est une vue en perspective et partielle du dispositif de la figure 1.
[Fig 3] est une vue en coupe de la chambre de vérin réalisée dans le carter.
[Fig 4] est une première vue en coupe de la chambre de vérin dans laquelle est logé le corps de vérin recevant le vérin.
[Fig 5] est une deuxième vue en coupe de la chambre de vérin dans laquelle est logé le corps de vérin recevant le vérin.

### Description détaillée

L'invention s'applique à toute turbomachine équipée d'au moins une soufflante carénée ou non carénée, et dont les pales d'hélice (dans le cas d'une soufflante non carénée) ou les aubes de soufflante (dans le cas d'une soufflante carénée) sont équipées d'un système de changement de pas. L'invention s'applique en particulier aux turbopropulseurs à une ou plusieurs hélices propulsives, ainsi qu'aux turboréacteurs à hélice(s) (appelés « Open Rotor » en anglais) qui comprennent une hélice (et un stator à calage variable pour l'USF - «Unducted Single Fan», soit «soufflante non carénée unique») ou deux hélices contrarotatives placées en amont (en version «puller» en anglais) ou en aval (en version «pusher» en anglais) du générateur de gaz.

L'invention s'applique encore aux turbomachines à soufflante carénée.

L'architecture de ces types de turbomachines est bien connue de l'homme du métier et ne sera donc pas décrite ici en détails. Brièvement, ces turbomachines comportent une ou plusieurs hélices (dans le cas d'une turbomachine à soufflante non carénée) ou une soufflante (dans le cas d'une turbomachine à soufflante carénée) constituées chacune d'un ensemble de pales (ou d'aubes) de soufflantes à angle de calage variable, c'est-à-dire que leur orientation peut être modifiée au moyen d'un système de commande de l'orientation des pales décrit ci-après.

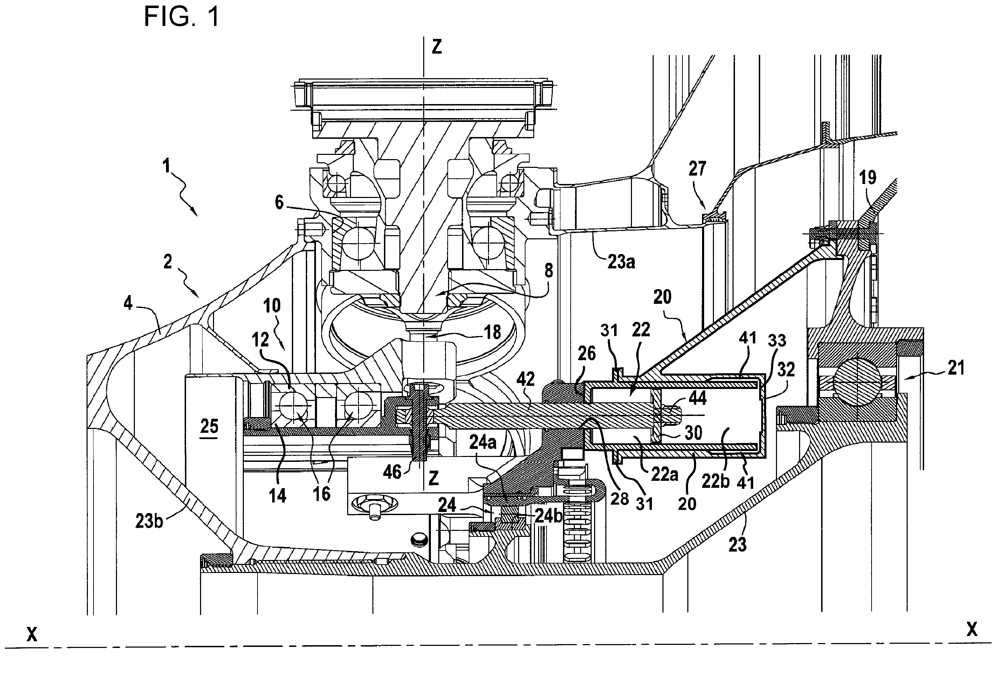

La Figure 1 représente partiellement un dispositif 1 comportant un exemple de système de commande 2 de l'orientation des pales d'une hélice d'une turbomachine à soufflante non carénée selon l'invention.

Bien entendu, dans le cas d'une turbomachine à soufflante carénée, le principe de l'invention décrit ci-après s'applique de la même manière pour les aubes de soufflante.

Ce système de commande 2 comprend un anneau rotatif 4 (ou moyeu) centré sur l'axe longitudinal X-X de la turbomachine et muni d'orifices 6 au travers duquel sont montés les pivots 8 des pales de soufflante (non représentées sur les figures).

Chaque pivot 8 est couplé, pour le réglage de l'orientation de la pale correspondante, à un palier de transfert de mouvement 10 (appelé également LTB pour «Load Transfer Bearing») destiné à faire pivoter ledit pivot autour de son axe radial Z-Z.

A cet effet, le palier de transfert de mouvement 10 comprend une bague externe 12 et une bague interne 14, ces bagues 12, 14 étant centrées sur l'axe longitudinal X-X de la turbomachine, mobiles en translation le long de cet axe X-X, et définissant des pistes de roulement pour des roulements (ici deux rangées de billes 16 à contact oblique pour transmettre des efforts axiaux dans les deux sens).

La bague externe 12 du palier à transfert de mouvement est couplé, directement ou indirectement, à une extrémité radiale interne des pivots, par exemple au moyen de bras de levier 18.

Lorsque la bague interne du palier à transfert de mouvement se déplace axialement sous l'actionnement d'un dispositif à vérin. Elle fait pivoter les bras de levier et ainsi les pivots 8 dans les orifices 6 de l'anneau rotatif autour de leur axe radial Z-Z, provoquant de la sorte un pivotement des pales de soufflante.

En aval du dispositif à vérin, la turbomachine comprend également un carter principal 19 portant un palier à roulement à billes 21 destiné à supporter en rotation l'arbre d'hélice 23 qui supporte l'anneau rotatif 4.

Cet arbre d'hélice 23 est de préférence entraîné par une turbine et un réducteur (non représentés sur les figures).

Sur ce carter principal 19, est fixé un carter annulaire 20 centré sur l'axe longitudinal X-X de la turbomachine et incliné par rapport à celui-ci d'un angle généralement supérieur à trente degrés (cette inclinaison étant orientée de sorte à conférer au carter 20 une forme de cône ouvert vers l'aval).

Typiquement, ce carter 20 sert de support pour un palier à roulement 24 destiné à guider en rotation l'anneau rotatif 4.

A cet effet, le carter 20 porte la bague externe 24a du palier à roulement 24 (dont la 35 bague interne 24b est solidaire de l'anneau rotatif 4).

De plus, le carter 20 et l'anneau rotatif 4 délimitent entre eux une enceinte huile 25 renfermant le dispositif à vérin 1.

Cette enceinte huile 25 est pressurisée en dépression de sorte que l'huile ne s'en échappe pas.

Pour limiter les débits de fuite hors de l'enceinte, il est notamment prévu de disposer un joint d'étanchéité 27 en aval des pivots des pales de soufflante, entre une virole 23a de l'hélice et le carter principal 19.

Des fuites sont possibles au niveau des orifices 6 de l'anneau rotatif 4 dans lesquels sont montés les pivots des pales de soufflante.

Ces fuites sont toutefois compensées par les étanchéités de l'enceinte huile.

Par ailleurs, cette enceinte huile 25 se prolonge à l'aval du palier à roulement 21 et peut 10 renfermer un réducteur et des étanchéités entre les différents arbres.

Selon l'invention, le dispositif à vérin 1 destiné à assurer un pivotement des pales de soufflante comprend notamment un corps de vérin annulaire 22 qui est centré sur l'axe longitudinal X-X de la turbomachine et qui est logé à l'intérieur de l'espace délimité par le carter 20 formant support de palier.

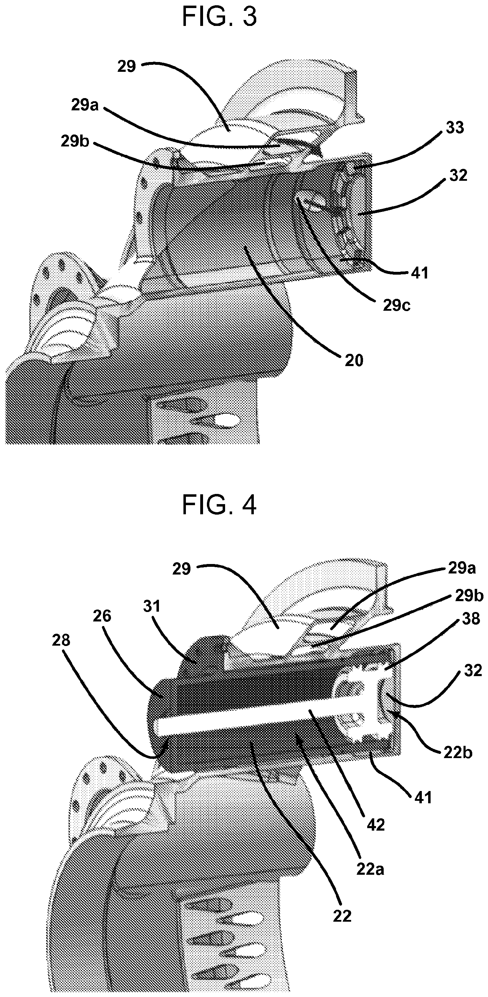

Comme illustré par la Figure 3, le corps de vérin 22 est une pièce rapportée sur le carter 20, contrairement aux corps de vérin de l'état de l'art qui forment une seule et même pièce avec le carter 20.

Le corps de vérin 22 délimite un volume interne à l'intérieur duquel est apte à coulisser un piston 30 séparant le volume interne du corps de vérin en deux chambres isolées l'une de l'autre, à savoir une chambre amont 22a et une chambre aval 22b.

On peut prévoir une pluralité de pistons indépendants ou liés chacun par leur tige à un anneau de synchronisation.

Cet anneau de synchronisation joue le rôle de synchronisateur des pistons 30 en étant apte à coulisser à l'intérieur du volume interne du corps de vérin 22 sous l'effet d'un fluide hydraulique (non représenté) injecté sous pression dans l'une ou l'autre des chambres amont et aval.

Comme illustré par la Figure 4, le volume interne du corps de vérin 22 est fermé à l'amont par une paroi 26 munie d'une pluralité de trous 28 traversés par les tiges de vérins 42. Les trous 28 sont répartis autour de l'axe longitudinal X-X de la turbomachine.

En outre, le volume interne du corps de vérin 22 est fermé à l'aval par un fond de chambre 32 qui forme, contrairement aux fonds de chambres des dispositifs connus, une seule et même pièce avec le carter annulaire 20 formant support de palier.

La réalisation du fond de chambre 32 intégralement dans la matière du carter annulaire 20 permet de s'affranchir des difficultés de l'adjonction d'une fermeture rapportée sur le carter 20 directement en regard du piston. Un fond de chambre adjoint entraîne en particulier des difficultés d'étanchéité et d'usure prématurée, alors que son intégration au carter accroit sa résistance mécanique aux contraintes de pression hydraulique élevées dans les chambres 22a, 22b.

En outre, un fond de chambre rapporté nécessite des dispositions particulières d'étanchéité du volume interne du corps de vérin, par exemple au niveau de sa périphérie interne, de façon à assurer une étanchéité du volume interne du corps de vérin dans lequel règne une pression d'huile importante.

Le corps de vérin 22 peut être solidarisé au carter annulaire 20 formant support de palier par une bride circulaire 31 couronnant le corps de vérin 22.

La bride circulaire 31 est vissée sur le carter annulaire 20, par exemple par une série de perçages répartis circulairement autour de l'axe longitudinal X-X de la turbomachine, au niveau d'une périphérie externe de la bride 31, et qui sont traversés par des vis (non représentés sur les figures) jusqu'à des taraudages disposés en regard sur le carter.

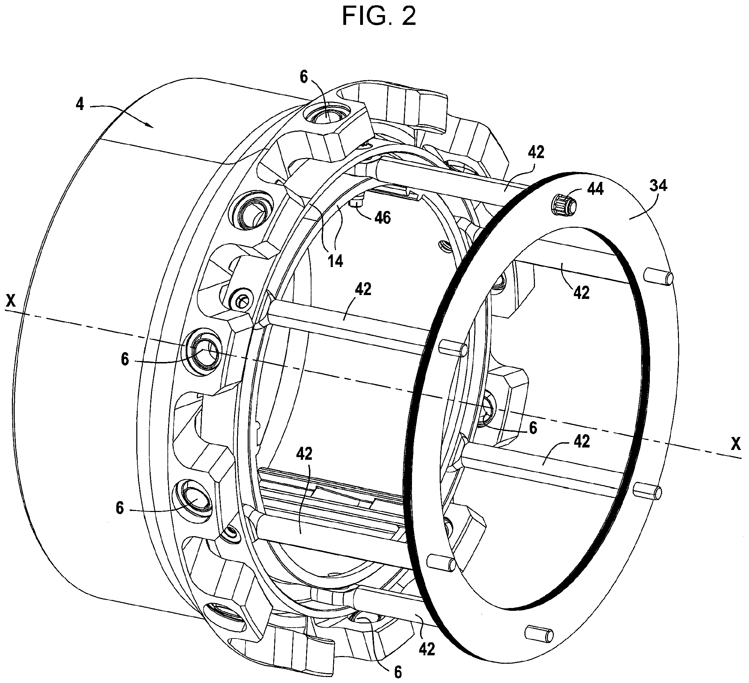

Comme représenté également sur la Figure 2, le dispositif à vérin 1 selon l'invention comprend également une pluralité de tiges de vérin 42 qui sont montées au travers des trous 28 de la paroi 26 du corps de vérin.

Ces tiges de vérin sont de préférence régulièrement réparties autour de l'axe longitudinal X-X de la turbomachine pour correspondre au besoin en effort de calage.

Le nombre de tiges de vérin est un compromis entre l'effort à faire passer dans chaque tige influant directement sur la section de chaque tige et le nombre de tiges influant sur le poids du système.

Préférentiellement il y a au moins 4 tiges pour répartir les efforts sur le piston.

Chaque tige de vérin 42 possède une extrémité aval qui est fixée à un piston 30 qui peut être lié à un anneau de synchronisation 34du corps de vérin par une tige de vérin 42 et une extrémité amont qui est reliée à la bague interne 14 du palier de transfert de mouvement 10 pour l'entraîner en translation.

La fixation des tiges de vérin sur chaque piston 30 peut se faire au moyen d'écrous 44 qui sont serrés sur l'extrémité aval des tiges, celles-ci étant filetées.

De même, au niveau de leur extrémité amont, les tiges de vérin 42 sont reliées à la bague interne 14 du palier de transfert de mouvement au moyen de vis 46 s'étendant selon une direction radiale (Figure 1).

La fonction d'anneau de synchronisation peut être effectuée soit par la bague interne 14 en cas de pluralité de corps de vérins 22 (Figures 3, 4 et 5) soit par un anneau de synchronisation distinct de la bague interne 14 et formé par l'unique piston 30 en cas de vérin unique de forme annulaire (Figure 2).

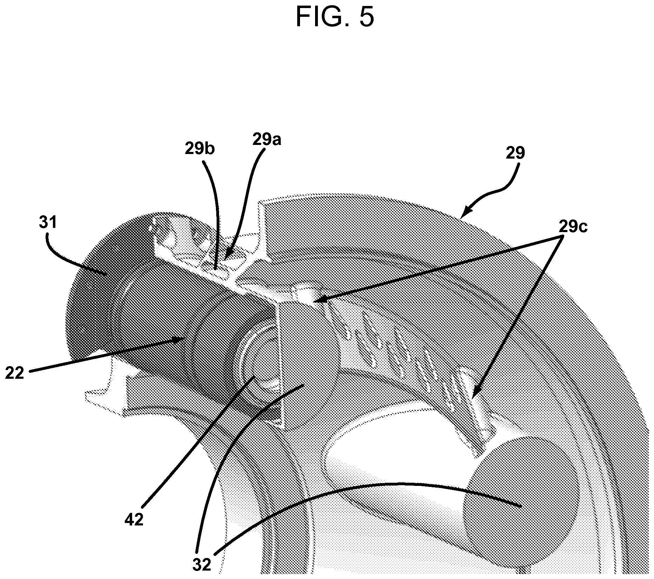

Comme illustré par les Figures 4 et 5, le dispositif 1 comporte un circuit d'huile annulaire 29 centré sur l'axe longitudinal X-X et entourant la pluralité de tiges de vérins 42.

L'utilisation de plusieurs vérins 42 permet d'assurer la redondance de leur fonction.

La maintenance du vérin est par ailleurs facilitée : celui-ci n'est plus enterré sous le moyeu fan, mais maintenant facilement accessible sur le support palier. De plus, on peut changer individuellement les vérins en cas de maintenance.

La circulation d'huile dans le circuit d'huile 29 est alimentée depuis l'enceinte huile 25 et débouche dans le corps de vérin 22 grâce à un passage débouchant 29c formant une entrée d'huile traversant le carter annulaire 20 vers le corps de vérin 22.

Le passage débouchant 29c est transversal à l'axe radial du dispositif 1 et dirigé vers le fond de chambre 32.

Le carter 20 comprend un élargissement annulaire 41 du passage 29c jusqu'au fond de chambre 32, qui permet à l'huile de circuler vers le fond de chambre 32.

Le fond de chambre 32 renvoie l'huile vers le piston 30. Chaque fond de chambre 32 associé à un vérin permet ainsi l'alimentation en huile de ce vérin.

Comme illustré, l'élargissement annulaire 41 peut former un espace de section environ rectangulaire selon le plan de découpe de la Figure 1, situé entre le carter 20 et le corps de vérin 22.

En outre, le fond de chambre 32 peut comporter des créneaux 33, répartis sur le contour intérieur du fond de chambre 32 (Figure 3).

Les créneaux 33 délimitent des creux permettant à l'huile arrivant depuis l'ouverture 29c et depuis l'élargissement 41 de s'insérer vers la chambre aval 22b, entre le piston 42 et le fond de chambre 32, notamment lorsque le piston 42 est contre les créneaux 33.

Les créneaux 33 permettent en outre d'assurer que le fond de chambre 32 n'est pas obstrué, un corps étranger ou un encrassement pouvant trouver logement entre les créneaux et non dessus, de sorte que la course du vérin 22 ne soit pas obstruée.

Le circuit d'huile annulaire 29 peut comporter une double circulation d'huile à travers deux canaux annulaires sensiblement concentriques 29a, 29b.

Notamment, on peut utiliser deux circuits d'huiles 29a, 29b complémentaires alimentant chacun la moitié des vérins 42, pour assurer la tenue du système à la défaillance d'un des deux systèmes d'huile.

Par exemple, les deux canaux annulaires 29a, 29b sont superposés, par soucis d'optimisation de la compacité du dispositif 1. Ils peuvent également avoir chacun une section de forme sensiblement trapézoïdale, notamment rectangulaire.

Les deux canaux annulaires 29a, 29b servent respectivement, pour le plus proche radialement de l'axe X-X et pour le plus éloigné, à réaliser la circulation d'huile entre les différents vérins 22, et à alimenter en huile le fond de chambre 32 par l'intermédiaire du support palier.

Dans ce cas, le conduit le plus proche radialement est donc celui qui débouche sur le passage débouchant 29c.

Le fonctionnement du dispositif à vérin 1 découle de manière évidente de ce qui précède.

Pour procéder à un réglage de l'orientation des pivots des pales de soufflante 8, un fluide hydraulique est injecté sous pression dans l'une ou l'autre des chambres amont et aval 22a, 22b de la chambre, ce qui entraîne un déplacement de chaque piston 30, (et de l'anneau de synchronisation s'il y en a un auquel sont liés tous les pistons 30) suivant l'axe longitudinal X-X de la turbomachine. Les tiges 42 translatent alors axialement de manière synchronisée de façon à déplacer le palier à transfert de mouvement vers l'amont ou vers l'aval. A son tour, cette translation du palier entraîne un pivotement des bras de levier 18 résultant en un pivotement synchronisé des pales de soufflante.

Le montage du dispositif à vérin selon l'invention est le suivant.

Dans un premier temps, on assemble l'arbre d'hélice 23 au réducteur et le palier à roulement 21 (et son support) au carter principal 19 de la turbomachine. Les tiges de vérin 42 et les pistons 30 pris un à un ou montés sur l'anneau de synchronisation sont alors assemblés sur le corps de vérin 22 et le carter 20 formant support de palier.

L'ensemble formé par les tiges de vérin 42, les pistons 30 indépendants ou montés sur l'anneau de synchronisation, le corps de vérin, le carter formant support de palier et le palier à roulement 24 peut ensuite être amené axialement de l'amont vers l'aval pour l'assembler sur le carter principal 19 de la turbomachine et 15 l'arbre d'hélice 23.

Le palier de transfert de mouvement 10 est alors assemblé avec les tiges de vérin 42.

Le carter aval 23a de l'hélice est ensuite assemblé avec l'anneau rotatif 4 et les pivots des pales de soufflante sont montés sur ce carter aval.

Les bras de levier 18 et les plots des pivots des pales de soufflante sont ajoutés pour lier les pivots au 20 palier de transfert de mouvement.

Enfin, un carter d'hélice amont 23b est assemblé 23c à l'arbre d'hélice 23 par l'intermédiaire d'une liaison cannelée et à l'anneau rotatif 4.

Le démontage du dispositif à vérin s'effectue en sens inverse.

On assemble ainsi un dispositif 1 servant de support de palier intégrant un fond de chambre et une circulation d'huile particulièrement compacts et résistants.

De plus, le support de palier est avantageusement conçu pour permettre l'impression à l'aide d'une technologie d'impression 3D de type « Fusion sur Lit de Poudre » (de l'anglicisme « Laser Bed Melting »). Cela permet de réaliser la pièce en monobloc et d'intégrer les canalisations de la circulation d'huile 29.

## Revendications

1. Dispositif (1) à vérin fixe pour système de commande (2) de l'orientation des pales de soufflante d'une turbomachine, comprenant :
un carter annulaire (20) pour la turbomachine, au moins un corps de vérin (22) logé à l'intérieur du carter annulaire (20) formant support de palier, ledit carter annulaire (20) étant configuré pour être centré sur un axe longitudinal (X-X) de la turbomachine et incliné par rapport à celui-ci, chaque corps de vérin (22) comprenant un volume interne dans lequel est apte à coulisser un piston (30) séparant le volume interne en deux chambres isolées (22a,22b) l'une de l'autre; et au moins une tige de vérin (42) traversant le carter annulaire (20) formant support de palier et
chaque tige de vérin (42) ayant une extrémité fixée au piston (30) et une extrémité opposée destinée à être reliée à une bague interne (14) d'un palier de transfert de mouvement (10) pour l'entraîner en translation, **caractérisé en ce que** ledit volume interne du corps de vérin (22) est fermé à l'aval par un fond de chambre (32) qui forme une seule et même pièce avec le carter annulaire (20) formant support de palier.

2. Dispositif (1) selon la revendication 1, dans lequel le volume interne du corps de vérin (22) est fermé en amont par une paroi (26) munie d'une pluralité de trous (28) traversés par les tiges de vérins (42).

3. Dispositif (1) selon l'une quelconque des revendications précédentes, dans lequel le corps de vérin (22) est solidarisé au carter annulaire (20) formant support de palier par une bride circulaire (31) entourant le corps de vérin (22).

4. Dispositif (1) selon la revendication 3, dans lequel la bride circulaire (31) est vissée sur le carter annulaire (20).

5. Dispositif (1) selon l'une quelconque des revendications précédentes, comprenant des créneaux (33) répartis sur le contour intérieur du fond de chambre (32).

6. Dispositif (1) selon l'une quelconque des revendications précédentes, comportant un circuit d'huile annulaire (29) centré sur l'axe longitudinal (X-X) et entourant la pluralité de tiges de vérins (42) et comportant un passage débouchant (29c) formant une entrée d'huile traversant le carter annulaire (20) vers le corps de vérin (22).

7. Dispositif (1) selon la revendication 6, dans lequel le circuit d'huile annulaire (29) comporte une double circulation d'huile à travers deux canaux annulaires sensiblement concentriques (29a, 29b).

8. Dispositif (1) selon l'une quelconque des revendications précédentes, comportant plusieurs corps de vérin (22) dans chacun desquels est logé un piston (30) et lesdits corps de vérin (22) sont répartis régulièrement autour de l'axe longitudinal (X-X) de la turbomachine.

9. Système de commande (2) de l'orientation des pales de soufflante d'une turbomachine, comprenant un dispositif (1) selon l'une quelconque des revendications 1 à 8 et au moins un ensemble de pales de soufflante à orientation réglable, ledit ensemble étant solidaire en rotation d'un anneau rotatif (4), les pales de soufflante étant couplées, pour le réglage de leur orientation, au palier de transfert de mouvement (10) destiné à faire pivoter des pivots (8) des pales de soufflante autour de leur axe radial, ledit palier de transfert de mouvement comprenant une bague interne (14) reliée audit dispositif (1).

10. Procédé de montage du dispositif selon l'une quelconque des revendications 1 à 8, comprenant, à partir d'un arbre d'hélice (23) préalablement monté sur un carter principal (19) de la turbomachine par l'intermédiaire d'un palier à roulement (21), l'assemblage de chaque vérin formé de l'au moins une tige de vérin (42) et du piston (30) monté sur le corps de vérin (22), ledit assemblage étant effectué en logeant chaque vérin un à un à l'intérieur du carter (20) formant support de palier, et l'assemblage de cet ensemble sur le carter principal (19) de la turbomachine et l'arbre d'hélice (23).

## Patentansprüche

1. Vorrichtung (1) mit einem festen Stellzylinder für ein System (2) zum Steuern der Ausrichtung der Gebläseschaufeln einer Turbomaschine, umfassend:
ein ringförmiges Gehäuse (20) für die Turbomaschine, mindestens einen Stellzylinderkörper (22), der im Inneren des ringförmigen Gehäuses (20) untergebracht ist, welches ringförmige Gehäuse eine Halterung für ein Lager bildet, wobei das ringförmige Gehäuse (20) dazu konfiguriert ist, auf einer Längsachse (X-X) der Turbomaschine zentriert und in Bezug auf diese geneigt zu sein, wobei jeder Stellzylinderskörper (22) ein Innenvolumen umfasst, in dem ein Kolben (30) gleiten kann, wodurch das Innenvolumen in zwei voneinander isolierte Kammern (22a, 22b) getrennt wird; und mindestens eine Zylinderstange (42), die durch das ringförmige Gehäuse (20) verläuft, welches ringförmige Gehäuse eine Halterung für das Lager bildet, und
wobei jede Zylinderstange (42) ein Ende aufweist, das am Kolben (30) befestigt ist, und ein gegenüberliegendes Ende, das dazu bestimmt ist, mit einem Innenring (14) eines Bewegungsübertragungslagers (10) verbunden zu werden, um es translatorisch anzutreiben,
**dadurch gekennzeichnet, dass** das Innenvolumen des Stellzylinderkörpers (22) stromabwärts durch einen Kammerboden (32) verschlossen ist, der mit dem ringförmigen Gehäuse (20), das eine Halterung für das Lager bildet, ein einziges Bauteil bildet.

2. Vorrichtung (1) nach Anspruch 1, wobei das Innenvolumen des Stellzylinderkörpers (22) stromaufwärts durch eine Wand (26) verschlossen ist, die mit einer Vielzahl von Löchern (28) versehen ist, durch die die Zylinderstangen (42) hindurchverlaufen.

3. Vorrichtung (1) nach einem der vorhergehenden Ansprüche, wobei der Stellzylinderkörper (22) durch einen kreisförmigen Flansch (31), der den Stellzylinderkörper (22) umgibt, fest mit dem ringförmigen Gehäuse (20) verbunden ist, das eine Halterung für das Lager bildet.

4. Vorrichtung (1) nach Anspruch 3, wobei der kreisförmige Flansch (31) auf das ringförmige Gehäuse (20) aufgeschraubt ist.

5. Vorrichtung (1) nach einem der vorhergehenden Ansprüche, die Schlitze (33) umfasst, die über die Innenkontur des Kammerbodens (32) verteilt sind.

6. Vorrichtung (1) nach einem der vorhergehenden Ansprüche, die einen ringförmigen Ölkreislauf (29) enthält, der auf der Längsachse (X-X) zentriert ist und die Vielzahl von Zylinderstangen (42) umgibt, und einen Durchgangskanal (29c) enthält, der einen Öleinlass bildet, der durch das ringförmige Gehäuse (20) in Richtung des Stellzylinderkörpers (22) verläuft.

7. Vorrichtung (1) nach Anspruch 6, wobei der ringförmige Ölkreislauf (29) eine doppelte Ölzirkulation durch zwei im Wesentlichen konzentrische ringförmige Kanäle (29a, 29b) enthält.

8. Vorrichtung (1) nach einem der vorhergehenden Ansprüche, die mehrere Stellzylinderkörper (22) enthält, in denen jeweils ein Kolben (30) untergebracht ist, und wobei die Stellzylinderkörper (22) gleichmäßig um die Längsachse (X-X) der Turbomaschine herum verteilt sind.

9. System zum Steuern (2) der Ausrichtung der Gebläseschaufeln einer Turbomaschine, umfassend eine Vorrichtung (1) nach einem der Ansprüche 1 bis 8 und mindestens eine Anordnung von Gebläseschaufeln mit einstellbarer Ausrichtung, wobei die Anordnung mit einem Drehring (4) drehfest verbunden ist, wobei die Gebläseschaufeln zum Einstellen ihrer Ausrichtung auf ein Bewegungsübertragungslager (10) gekoppelt sind, das dazu bestimmt ist, die Drehgelenke (8) der Gebläseschaufeln um ihre Radialachse herum zu schwenken, wobei das Bewegungsübertragungslager einen mit der Vorrichtung (1) verbundenen Innenring (14) umfasst.

10. Montageverfahren für die Vorrichtung nach einem der Ansprüche 1 bis 8, umfassend, ausgehend von einer Propellerwelle (23), die zuvor über ein Wälzlager (21) an einem Hauptgehäuse (19) der Turbomaschine montiert wurde, das Zusammenbauen jedes Stellzylinders, der aus der mindestens einen Zylinderstange (42) und dem auf dem Stellzylinderkörper (22) montierten Kolben (30) ausgebildet ist, wobei das Zusammenbauen so ausgeführt wird, dass jeder Stellzylinder nacheinander im Inneren des Gehäuses (20), das eine Halterung für das Lager bildet, untergebracht wird, und das Zusammenbauen der Anordnung am Hauptgehäuse (19) der Turbomaschine und der Propellerwelle (23) .

## Claims

1. Device (1) with a fixed actuator for a system for controlling (2) the orientation of the fan blades of a turbomachine, comprising: an annular casing (20) for the turbomachine, at least one actuator body (22) accommodated inside the annular casing forming a support for a bearing, said annular casing (2) being configured to be centred on a longitudinal axis (X-X) of the turbomachine and inclined with respect to this axis, each actuator cylinder body (22) comprising an inner volume in which a piston (30) is able to slide, separating the inner volume into two chambers (22a, 22b) isolated from each other; and at least one actuator rod (42) passing through the annular casing (20) forming a support for the bearing and each actuator cylinder rod (42) having one end fastened to the piston (30) and an opposite end intended to be connected to an inner ring (14) of a movement transfer bearing (10) to drive it in translation, **characterised in that** said inner volume of the actuator cylinder body (22) is closed downstream by a chamber bottom (32) which forms one-piece with the annular casing (20) forming a support for the bearing.

2. Device (1) according to claim 1, wherein the inner volume of the actuator cylinder body (22) is closed upstream by a wall (26) provided with a plurality of holes (28) through which the actuator cylinder rods (42) pass.

3. Device (1) according to any of the preceding claim, wherein the actuator cylinder body (22) is secured to the annular casing (20) forming a support for the bearing by a circular flange (31) surrounding the actuator cylinder body (22).

4. Device (1) according to claim 3, wherein the circular flange (31) is screwed onto the annular casing (20).

5. Device (1) according to any of the preceding claims, comprising slots (33) distributed over the internal contour of the chamber bottom 32).

6. Device (1) according to any of the preceding claims, including an annular oil circuit (29) centred on the longitudinal axis (X-X) and surrounding the plurality of actuator cylinder rods (42) and including a through passage (29c) forming an oil inlet passing through the annular casing (20) towards the actuator cylinder body (22).

7. Device (1) according to claim 6, wherein the annular oil circuit (29) includes a double circulation of oil through two substantially concentric annular channels (29a, 29b).

8. Device (1) according to any of the preceding claims, including several actuator cylinder bodies (22) in each of which a piston (30) is accommodated and said actuator cylinder bodies (22) are evenly distributed around the longitudinal axis (X-X) of the turbomachine.

9. System for controlling (2) the orientation of the fan blades of a turbomachine, comprising a device (1) according to any of claims 1 to 8 and at least one set of fan blades with adjustable orientation, said set being secured in rotation with a rotary ring (4), the fan blades being coupled, for the adjustment of their orientation, to the movement transfer bearing (10) intended to make pivots (8) of the fan blades pivot about their radial axis, said movement transfer bearing comprising an inner ring (14) connected to said device (1).

10. Method for mounting the device according to any of claims 1 to 8, comprising, starting from a propeller shaft (23) mounted beforehand on a main casing (19) of the turbomachine via a rolling bearing (21), assembling each actuator cylinder formed of the at least one actuator cylinder rod (42) and the piston (30) mounted on the actuator cylinder body (22), said assembly being performed by accommodating each actuator cylinder one after another inside the casing (20) forming a support for the bearing, and the assembly of this set on the main casing (19) of the turbomachine and the propeller shaft (23).
